# EUROPEAN PATENT SPECIFICATION

(11) **EP 0 231 862 B1**
(45) Date of publication and mention of the grant of the patent: **04.05.1994**
(21) Application number: 87101105.2
(22) Date of filing: 27.01.1987
(51) Int. Cl.: B01D 46/42, B01D 27/08

(54) **Quick-change filter cartridge and head therefor**
Schnellwechselfilterpatrone und Kopf dafür
Cartouche de filtre à changement rapide et sa partie supérieure

(30) Priority: 27.01.1986 US 822536
(43) Date of publication of application: 12.08.1987
(73) Proprietor: Cuno Incorporated, Meriden Connecticut 06450 (US)
(72) Inventor: Petrucci, Raymond M., Middlebury, Connecticut 06764 (US); Taylor, Bruce G., Kensington, Connecticut 06037 (US); Giordano, Edward C., Manchester, Connecticut 06040 (US)
(74) Representative: Grünecker, Kinkeldey, Stockmair & Schwanhäusser Anwaltssozietät

(56) References cited:
- GB-A- 1 296 051
- US-A- 3 746 171
- US-A- 3 954 624
- US-A- 4 495 072

## Description

The present invention is directed to a fluid filter and more particularly to a quick change disposable filter canister for filtering liquids.

The present invention is directed to a fluid filter and more particularly, to a quick change disposble filter canister for filtering liquids of the type as shown in US-A-3,954,624.

A bayonet-type securing means for securing the canister to the head is already known from GB-A-1,296,051, disclosing a neck-type filter canister having securing means, including radially projecting tabs located on the main body of the housing. In particular, a clip member is provided as a separate piece with a lock portion of the bayonet coupling.

Vending machines for dispensing liquids such as coffee or soft drinks in a cup are in wide spread use in our society. It is common to filter liquids such as water in coffee machines or soft drinks before they are dispensed by circulating the liquid through an appropriate filtering device. Such filtering devices have a limited useful life and require frequent replacement.

It is therefore very helpful and desirable to construct the filter for easy and simple removal and replacement. Thus, personnel who routinely replenish the machines with supplies could also replace the filter. Since those who restock the machines are not mechanically trained and do not carry hand tools, it has been known to construct the filtering device as an assembly which includes a permanently installed head in the machine and a disposable filter canister which can be easily installed in the head by persons without mechanical skill and without use of any hand tools.

Various filters of this type have been previously described. The known filtering devices are often complex in structure which tends to increase their cost. Moreover, the wide practice has been to provide "screw on" types of filters, similar to the familiar car oil filter, which require patience and time to align the filter and to screw it into position. The known filtering devices are typified by the following examples:
US-A-3,746,171 in the name of Thomsen is directed to a filter assembly which includes a permanently installed head fixedly mounted in a machine and a replaceable filter unit. The replaceable filter unit is supported in a rotatable clamping collar. Upon rotation of the clamping column the filter unit is secured in the head. The head structure is complicated by the inclusion of a shut-off valve. The mating end of the replaceable filter is conically shaped and includes two coaxial tubular portions which define input and output ports into the canister. The canister receiving opening in the head in cylindrical but has a non uniform diameter to fit snugly over and accommodate the replaceable filter.

Other patents which appear to be relevant to the subject matter of the present invention include:
U.S. Patent Nos. 2,563,548; 2,568,181; 2,979,208; 3,217,942; 3,313,417; 3,313,418; 3,319,791; 3,333,697; 3,347,386; 3,859,216; 4,051,036; 4,052,307; 4,082,673; 4,105,561; 4,268,384; 4,304,736; 4,349,438; 4,465,595; 4,495,072; 4,520,950; and 4,497,348. The majority of the above patents are directed to various filter assemblies, particularly to such assemblies having a removable filter cartridge that is attached to some type of head. A representative group of the patent is discussed below.

US-A-2,563,548 in the name of Plante discloses a gasoline filter cartridge 33 having arms 42 received in a recess 50 on the under surface of a head. The filter is threaded onto the head.

US-A-2,568,181 in the name of Zimmerman et al. shows outwardly projecting lugs or fins 21 on the filter cartridge which are received above stops 39 in a cover. This invention was envisioned for use in connection with automotive engines.

US-A-3,217,942, to Humbert Jr. et al. discloses a filter unit which is particularly adapted for use in a gas station wherein the filter is located in a dispensing handle of a gasoline hose through which gasoline is dispensed into automotive vehicles. The replaceable filter unit has a neck portion which is in fluid communication with a discharge nozzle 22 and an annular clearance around the neck which is in communication with the incoming fluid from the hose. The replaceable filter is threadedly received and supported on the gas dispensing handle.

In the patent to Juan, US-A-3,319,079 there is shown a filter cartridge secured within a head. The cartridge appears to have a reduced diameter end that is received within the filter head. The end carries several O-rings and is comprised of two unequally long concentric tubes to provide an input and an output path into the filter.

In the patent to Rosaen US-A-3,333,697 a bayonet filter which is structurally dissimilar from the filter of the present invention is disclosed.

US-A-4,052,307 in the name of Humbert Jr. is directed to a universal filter mounting attachment particularly for the automotive field. This filter is of the spin-on type in which there is provided an adapter having lugs which are received in slots in the filter cartridge.

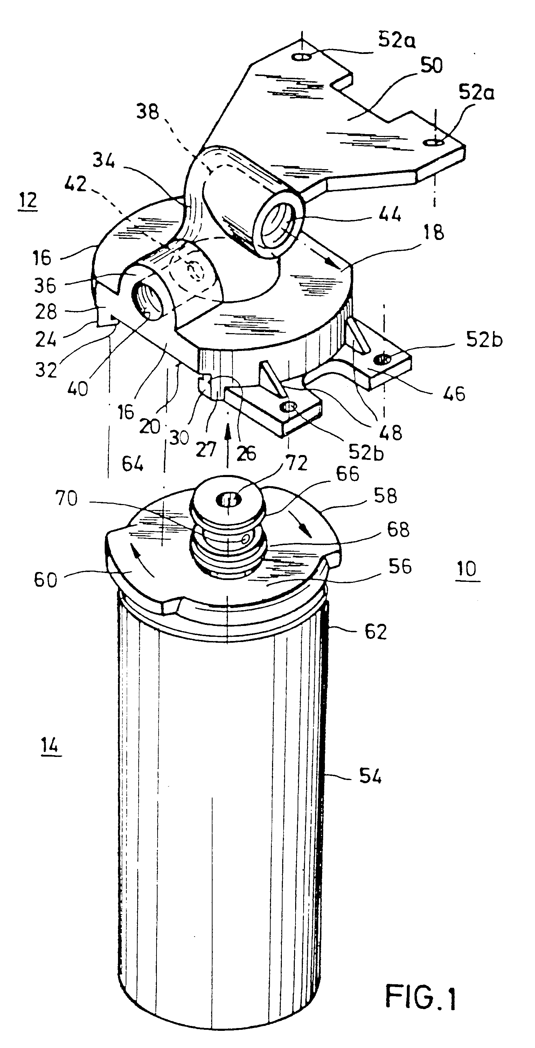

In the patent to Domnick US-A-4,105,561 there is shown a cartridge having a reduced diameter end that is received in a filter head. The cartridge is surrounded by a housing 1 as shown in Fig. 1 thereof.

In the patent to Cooper US-A-4,456,595 there is disclosed a filter cartridge in a head assembly which includes means for facilitated cartridge securement and removal. This patent deals with industrial filters which are used under high pressure and which are tightened with great force onto the head.

McMillin et al. US-A-4,304,736 describes an apparatus for making and dispensing carbonated beverages. Similarly, Jeans US-A-4,529,050 is directed to a beverage dispenser particularly adapted for use in the home. The patent to Sedam, US-A-4,497,348 shows a portable post-mix carbonated beverage dispenser unit for which the quick-change filter of the present invention is particularly useful. The last three patents are generally relevant to art of the present invention.

A prior filter, having the designation AP317 and provided by the assignee of the present application, comprises a filter canister having a neck and a tube that extends from the neck into the canister. The opening into the tube, at the top of the neck, is sealed from other entrances into the neck by a flexible especially provided flat hat, rather than a seal that is located on the neck's radial periphery.

The filter assemblies of the prior art are intricate in construction and therefore less economical. The majority are screw on types and are somewhat more cumbersome to use. There is a present need for filter canisters with combined attributes of simplicity, reliability and inexpensiveness.

It is the object of the present invention to provide a filtering apparatus of the type as known from US-A-3,954,624, which is designed such that the canister can be most easily installed or replaced without rendering said filter apparatus expensive and unreliable.

The above object is achieved by the combination of features recited in claim 1. Preferred embodiments and further improvements of the inventive filter apparatus are defined in the subclaims.

In the inventive filtering device, a head is provided which is intended to be permanently installed in a machine. Furthermore, a replaceable filter canister is provided which can be mounted by hand and without tools in the head.

The head includes a generally flat circular plate with a bottom side which faces the canister and a top side. A pair of tab receptacles extend from the bottom and near the radial periphery of the plate. The tab receptacles form two diametrically opposed channels in which appropriate tabs located on the canister can be fitted to secure the canister in the head. A cylindrical upstanding central chamber is located at the center and on the top side of the plate which central chamber is accessible from the bottom of the plate. Above the plate, an inlet port and an outlet port are in fluid communication with the central chamber. The ports will be connected to appropriate liquid carrying conduits or hoses of a vending or other apparatus in which fluid filtering is to take place. Preferably, the outlet port is located at the top of the central chamber and the inlet port communicates into the central chamber through the peripheral side wall of the central chamber.

The disposable canister is generally flask or bottle shaped and includes a main housing in which filtering material is disposed. Preferably, the main housing is cylindrical and has a flat top. A reduced diameter neck portion protrudes from the top. The diameter is fairly constant and the neck is shaped to fit into the central chamber in the head.

A tube of smaller diameter than the interior diameter of the neck extends from the top of the neck almost to the bottom of the main housing. The neck is closed at the top except for the opening formed by the tube. A pair of spaced seals, preferably O-rings, are located on the cylindrical peripheral wall of the neck. An inlet opening, preferably a pair of diametrically opposed openings is located in the peripheral wall of the neck and on the surface which is bounded by the two seals. The inlet openings provide a fluid communication path into an annular clearance which is defined between the interior of the neck and the tube.

Fluid will enter the disposable canister through the inlet openings and flow through the filtering media disposed in the interior chamber of the main housing. Upon reaching the bottom of the housing, the now filtered liquid will rise through the tube and exit the canister at the top of the neck.

A pair of tabs project radially from the main housing. The tabs are about level with the top surface of the main housing. To install or replace the disposable canister, the tabs are misaligned with the tab receptacles on the head to permit the neck of the canister to enter the central chamber in the head. Thereafter the canister will be turned through a 90 i.e. 1/4, turn to lock the tabs in the channel formed by the tab receptacle in the head. The two O-rings on the head will make a slip-connection with the interior surface of the central chamber. The neck and the seals are so located that the tube opening at the top of the neck will be in sealing relationship with the outlet port in the central chamber and the inlet openings between the two seals will be in sealing relationship with the inlet port.

The head and disposable canister are preferably constructed of molded plastic material. The head is preferably a single integral molded piece which also includes a pair of flanges which are employed to mount the head in the vending machine through appropriate screws or bolts.

Other features, advantages and uses of the present invention will become apparent from the following description of a preferred embodiment of the present invention which is described in conjunction with the appended drawings.

### DESCRIPTION OF THE DRAWINGS

Fig. 1 is a perspective of the head and the disposable canister.

Fig. 2 is an elevational cross section through the disposable canister which is mated with its head, the view taken along lines II-II of Fig. 3.

Fig. 3 is a top view of the head along lines III-III in Fig. 2.

Fig. 4 is a cross sectional enlarged view through the disposable canister which is mated with its head.

Fig. 5 is a bottom view of the head along lines V-V of Fig. 4.

Fig. 6 is yet another cross section elevational view through the disposable canister and its head, the figure indicating the fluid flow through the head and the disposable canister.

Fig. 7 is a section through lines VII-VII in Fig. 5.

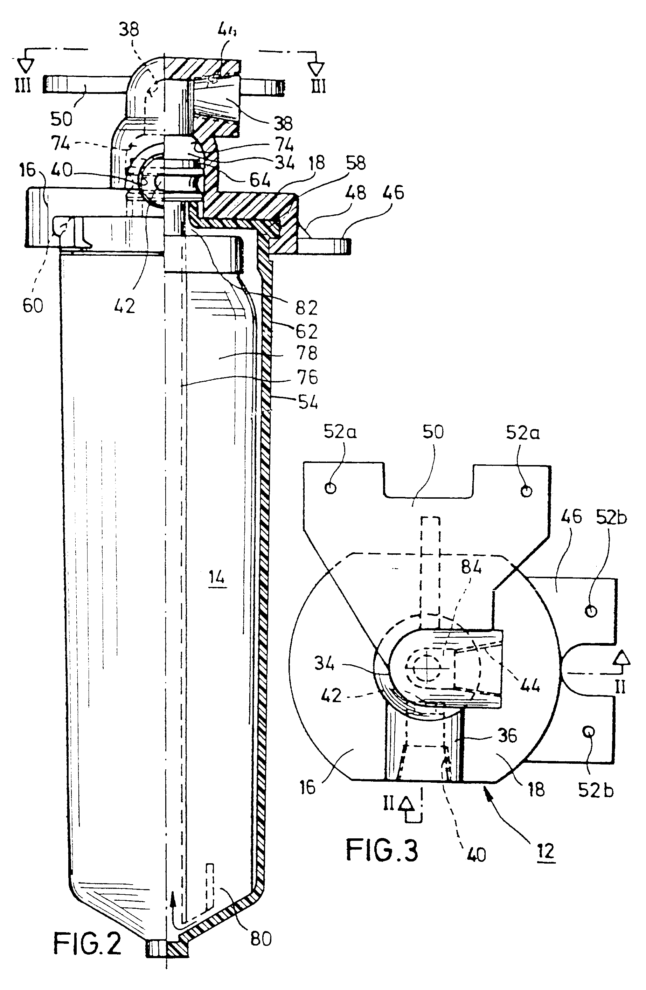

A preferred embodiment of the present invention will now be described by reference to the figures which will be taken up in sequence. Thus, in referring to Fig. 2 only those elements and features of the present invention not previously described in relation to Fig. 1 will be described and so on for the remaining figures. Like elements will bear like numerals throughout the figures.

As shown in Fig. 1, a filtering device 10 includes a head 12 and a disposable canister 14. The head 12 is an integral piece, preferably molded of plastic, which includes a circular flat plate 16 with a top surface 18 and a bottom surface 20. A pair of diametrically opposed arcuate shaped tab receptacles 22 and 24 depend from the bottom side 20 of the plate 16 and are intended for supporting the disposable canister 14. The tab receptacles 22 and 24 include, respectively, an upstanding arcuate wall 26 and 28 a reentrant cam wall 30 and 32 as shown. Note that the illustrated section of reentrant wall 32 is narrower in thickness than the thickness of the right sided reentrant wall 30. The narrowed thickness section represents a tapered beginning cam surface which facilitates rotation of the disposable canister 14 while the increased thickness section is a stop block which will prevent the disposable canister 14 from rotating more than about 90°.

On the top side of the plate 16 is located an upstanding central chamber 34 as well as an inlet port 36 and an outlet port 38. The inlet port 36 has a threaded opening 40 for receiving an inlet hose as well as a reduced diameter nozzle 42 which communicates into the central chamber 34. Similarly, the outlet port 38 includes a threaded opening 44 to which an outlet hose (not shown) of a vending machine or a similar suitable apparatus can be attached. The outlet port 38 communicates with the central chamber through a top opening (not shown) in the central chamber 34.

A pair of integrally formed supports including a first support 46 connected to the plate 16 and reinforced by wedges 48 as well as a second support 50 protrude from the head 12. Support 50 is provided for mounting head 12 to a support structure (not shown) in the vending machine or the like and support 46 is intended for mounting, for example, a temperature probe or other monitoring devices. Screw or bolt holes 52a in the support 50 will be used for securing the head to the machine. Holes 52b will be used for securing the monitoring devices to the head 12.

Disposable canister 10 is seen to include a main housing 54, preferably cylindrically shaped, which housing has a generally flat top 56 and a pair of tabs 58 and 60 protruding radially from the top 56. The housing 54 may include the top 56 which is mated together with a bottom portion 62 of a housing when a filtering material (not shown) is disposed in the housing. A preferred filter media for use in filtering water for soft drinks and in particular carbonated water, is activated carbon. Pre and post filtering media may also be included in the canister.

A neck 64 of substantially uniform outer diameter projects from the top 56 of main housing 54 and a pair of seals, preferably O-rings, which include an upper O-ring 66 and a bottom O-ring 68 are mounted on the neck 64. A pair of diametrically opposed openings including a first inlet opening 70 provide an inlet path into the interior of the main housing 54. A tube opening 72 at the top of the neck provides a second conduit into the bottom of the housing through a tube which will be described later herein.

Fig. 2 is a section along line II-II in Fig. 3 and thus the left side portion thereof is an outside view of the left side of the canister and head and the right side is a sectional view. The central chamber 34 is shown to have substantially uniform diameter with curving top surfaces 74 which define an opening into the output port 38. The relative sizes of the threaded opening 40 of the input port 36 and the reduced diameter nozzle 42 into the central chamber are also shown. Tube 76 extends from the neck 64 and through filtering material 78 to the bottom 80 of main housing 54. Note the annular clearance 82 between the peripheral wall of the neck and the tube 76.

The top view of Fig. 3 shows by appropriate dashed lines the relative dimensions of the threaded openings in the input and output ports as well as their respective nozzles 42 and 84 which communicate into central chamber 34.

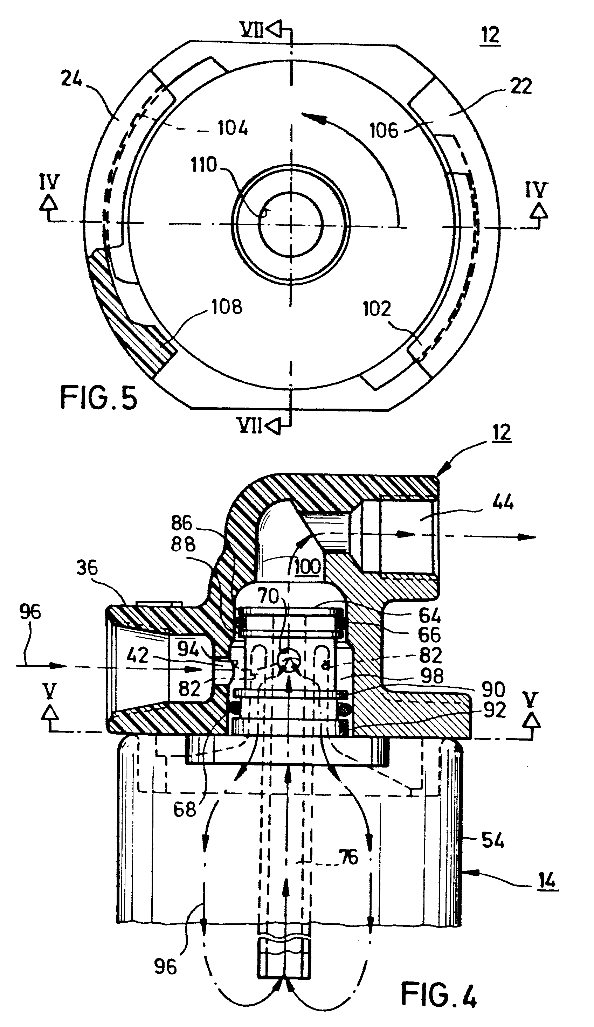

In the cross sectional view of the head and the upper portion of the disposable filter in Fig. 4, the neck 64 is shown to have a respective pair of annular projections 86, 88 and 90, 92 for supporting the seals 66 and 68 against movement during insertion of the neck 64 into the central chamber 34. Each pair of annular projections from a seal seat for its respective seal. Preferably, the outer diameter of the first O-ring 66 is smaller than that of the second O-ring 68 to facilitate insertion of the neck past the protruding edge 94 of inlet port 36. Note again annular clearance 82 defined between the inner peripheral wall of neck 64 and tube 76.

Liquid flow through the head 12 and the disposable canister 14 is along the path shown by arrows 96. As should be apparent liquid conducting hoses (not shown) will carry the liquid into the input port 36 wherein the liquid will flow through nozzle 42 into the annular space 98 located between O-rings 66 and 68 outside neck 64. The nozzle 42 is displaced 90° from the inlet opening 70. Thus, the liquid will flow for about 90 in two directions to enter annular clearance 82 located between the neck and the tube. As the arrows 96 indicate the liquid will now flow to the bottom of the interior of the housing, all the while being filtered by the filtering material 78 located in its path until at the bottom 80 the liquid enters into the tube 76.

In the tube the liquid will rise and empty into the upper region 100 of the central chamber, the upper O-ring 66 sealing region 100 from the inlet space 98. The lower O-ring 68 will prevent the incoming liquid from escaping between the head and the main housing. Note in this figure the general shape of the inlet and outlet ports. Note too, that for convenience the outlet port is shown in the same plane as the inlet opening although in the prior figures the inlet and outlet ports are disposed at 90 with respect to each other.

Figure 5 provides a bottom view of the head 12 also showing the top 56 of main housing 54 turned at an angle of about 45° relative to the head 12. In this view may be seen on the right tab receptacle 22 a tapered section 102 which will facilitate turning of the disposable canister even if the canister is not fully in abutment against the bottom of the head. Note that a similar tapered section 104 is also provided on tab receptacle 24. On the other end of the tab receptacles, end of travel stoppers 106 and 108 are formed.

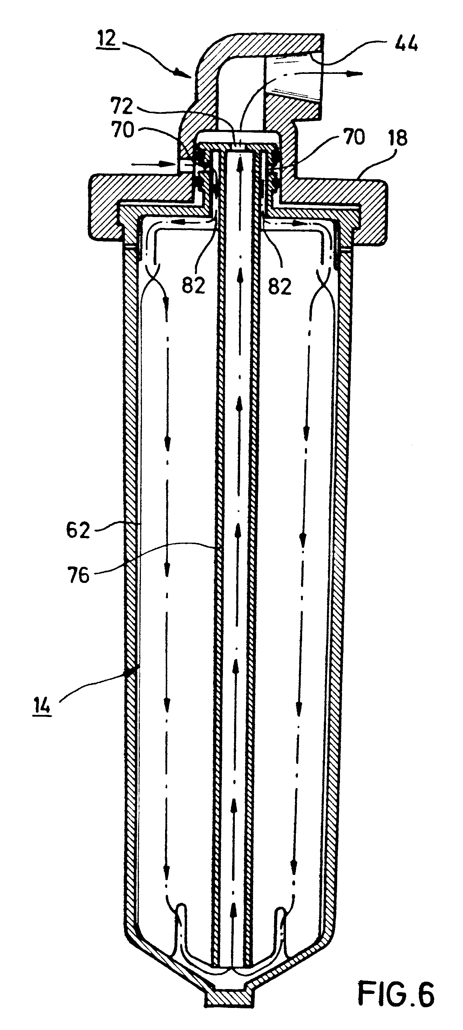

Fig. 6 is an elevational cross section which is similar to the view provided in Fig. 4 except that disposable canister 14 and head 12 are turned 90° to provide a better view of inlet openings 70 into the annular clearance 82 formed between the neck and the tube.

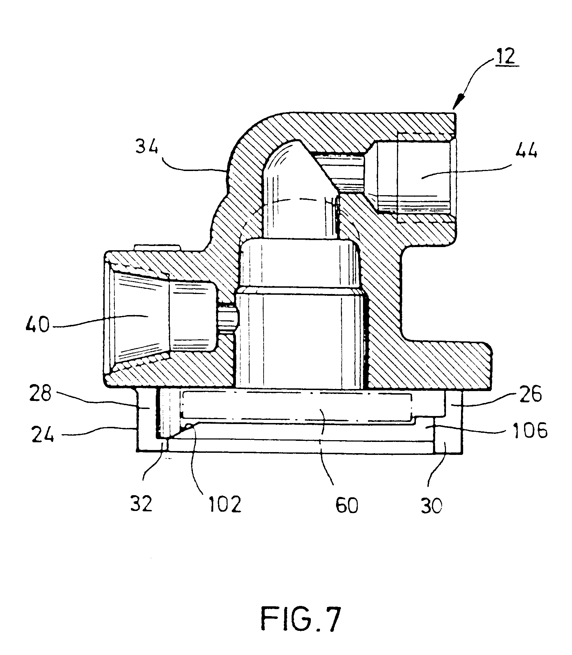

Fig. 7, which is a cross section through line VII-VII of Fig. 5, is a better view of the tapered section 102 of head 12 and of end of travel stop 106 which will stop the canister after a one quarter turn.

The head 12 and filtering canister 14 of the present invention are seen therefore to be relatively simple in construction and easily and economically fabricatable. The overall length of the filter is about 8 to 10 inches (20.3 to 25.4 cm) and its diameter is such that is can be easily grasped and handled by one hand. The head is dimensioned to complement the size of canister 14.

## Claims

1. A filtering apparatus (10) comprising a head (12) intended to be permanently installed in a fluid dispensing machine and a disposable canister (14) therefor, wherein a central chamber (34) is formed in the head which chamber is in fluid communication with an inlet port (36) and an outlet port (38) for receiving an unfiltered liquid and supplying a filtered liquid, respectively, wherein said disposable canister (14) has a flask-shaped main body with a flat top (56) and a neck (64) of substantially uniform diamter on the top, said neck fitting into said central chamber, wherein a tube (76) extending through the neck defines an annular clearance (82) between the tube and the interior of the neck which annular clearance is in fluid communication with the inlet port and wherein an opening (72) into said tube located at the top of the neck (64) is in fluid communication with the outlet port in the head (12),
a first seal (66) disposed circumferentially around said neck and adjacent its distal end, a second seal (68) disposed below said first seal, and at least one opening (75) into the interior of said housing (54) which opening is located between said first seal and said second seal, said first seal making slip-connection with the interior surface of said central chamber of said head (12) such that one of said inlet and outlet ports in the head is in sealed fluid communication with the interior of said housing through said tube (76) and wherein the other one of said inlet and outlet ports of said head is in sealed fluid communication with the interior of said housing through a space (98) located between said first and second seals and through said at least one opening (70) into said housing,
**characterized by**
a pair of tab receptacles (22,24) on said head (12) and a complementary pair of tabs which are provided on said canister (14) which are engageable with one another by one-quarter rotation of the canister to lock the canister to the head, wherein each of said tab receptacles (22,24) is provided with a tapered section (102,104) for facilitating turning of the disposable canister even if the canister is not fully in abutment against the head.

2. A filtering apparatus according to claim 1, wherein said housing is circular in cross-section.

3. A filtering device according to claim 1 in which said tabs comprise first and second tabs which are level with the top surface of said housing and which are spaced apart about 180° from each other.

4. The filtering apparatus of claim 1, wherein the tab receptacles (22,24) include, respectively, an upstanding arcuate wall (26,28) and a re-entrant cam wall (30,32).

## Patentansprüche

1. Filtervorrichtung (10), umfassend einen Kopf (12), zur permanenten Anordnung in einer fluidverteilenden Maschine und einen an diese angepaßten Kanister (14), wobei eine zentrale Kammer (34) in dem Kopf ausgebildet ist und wobei diese Kammer in Fluidverbindung mit einer Einlaßöffnung (36) und einer Auslaßöffnung (38) steht, um eine ungefilterte Flüssigkeit aufzunehmen bzw. eine gefilterte Flüssigkeit zuzuführen, wobei dieser angepaßte Kanister (13) einen kastenförmigen Hauptkörper aufweist mit einem flachen Oberteil (56) und einem Hals (64) mit im wesentlichen gleichförmigen Durchmesser in dem oberen Teil, dieser Hals in dieser Hauptkammer eingepaßt ist, wobei ein sich durch den Hals erstreckendes Rohr (76) einen ringförmigen Abstand (82) zwischen dem Rohr und dem Inneren des Halses definiert, wobei der ringförmige Abstand in Fluidverbindung mit der Einlaßöffnung steht und wobei eine Öffnung (72) in dieses Rohr, angeordnet an dem oberen Bereich des Halses (64), in Fluidverbindung mit der Auslaßöffnung des Kopfes (12) steht,
eine erste Dichtung (66), angeordnet rings um diesen Hals und in der Nähe des distalen Endes, eine zweite Dichtung (68), angeordnet unterhalb dieser ersten Dichtung, und wenigstens eine Öffnung (75) in das Innere dieses Gehäuses (54), wobei die Öffnung zwischen der dieser ersten Dichtung und dieser zweiten Dichtung angeordnet ist, wobei diese erste Dichtung eine Rutschverbindung mit der Innenfläche der Hauptkammer dieses Kopfes (12) herstellt, so daß eine der Einlaßund Auslaßöffnungen in dem Kopf sich in abgedichteter Fluidverbindung mit dem Inneren dieses Gehäuses durch dieses Rohr (76) befindet und wobei die andere dieser Einlaß- und Auslaßöffnungen in diesem Kopf in abgedichteter Fluidverbindung mit dem Inneren dieses Gehäuses durch einen Zwischenraum (98) steht, welcher zwischen dieser ersten und zweiten Dichtung angeordnet ist und durch diese wenigstens eine Öffnung (70) in diesem Gehäuse,
**gekennzeichnet durch**
ein Paar Zapfenaufnahmebehälter (22, 24) an diesem Kopf (12) und ein komplementäres Paar von Zapfen, welche an diesem Kanister (14) vorgesehen sind, welche miteinander durch eine Vierteldrehung des Kanisters in Eingriff bringbar sind, um den Kanister mit dem Kopf zu verbinden, wobei jede der Zapfenaufnahmebehälter (22, 24) mit einem verjüngenden Bereich (102, 104) versehen ist, um das Drehen des beseitigbaren Kanisters zu vereinfachen, auch wenn der Kanister nicht vollständig gegen den Kopf stößt.

2. Filtervorrichtung nach Anspruch 1, wobei dieses Gehäuse im Querschnitt rund ist.

3. Filtervorrichtung nach Anspruch 1, wobei diese Zapfen erste und zweite Zapfen umfassen, welche auf dem gleichen Level mit der Oberfläche dieses Gehäuses liegen und welche 180° voneinander abliegen.

4. Filtervorrichtung nach Anspruch 1, wobei die Zapfenaufnahmebehälter (22, 24) jeweils eine stehende gewölbte Wand (26, 28) und eine zusammenhängende, einen Nocken bildende Wand (30, 32) umfassen.

## Revendications

1. Dispositif de filtration (10) comportant une tête (12) prévue pour être installée de manière permanente dans une machine distributrice de fluide et un réservoir (14) pouvant être adapté sur celle-ci, dans lequel une chambre centrale (34) est formée dans la tête, laquelle chambre est en communication de fluide avec un orifice d'entrée (36) et un orifice de sortie (38), destinés, respectivement à recevoir un liquide non filtré et délivrer un liquide filtré, dans lequel ledit réservoir pouvant être adapté (14) a un corps principal en forme de flacon muni d'une partie supérieure plate (56) et d'un col (64) ayant un diamètre pratiquement uniforme et situé sur la partie supérieure, ledit col s'adaptant dans ladite chambre centrale, dans lequel un tube (76) s'étendant à travers le col définit un espace annulaire (82) entre le tube et la partie intérieure du col, espace annulaire qui est en communication de fluide avec l'orifice d'entrée, et dans lequel une ouverture (72) dudit tube située au niveau de la partie supérieure du col (64) est en communication de fluide avec l'orifice de sortie situé dans la tête (12), un premier joint (66) est agencé circonférentiellement autour dudit col et adjacent à son extrémité distale, un second joint (68) est agencé au-dessous dudit premier joint, et au moins une ouverture (75) est située dans la partie intérieure dudit boîtier (54), laquelle ouverture est située entre ledit premier joint et ledit second joint, ledit premier joint assurant une liaison coulissante avec la surface intérieure de ladite chambre centrale de ladite tête (12) de telle sorte que l'un parmi lesdits orifices d'entrée et de sortie situés dans la tête est en communication de fluide étanche avec l'intérieur dudit boîtier par l'intermédiaire dudit tube (76) et dans lequel l'autre parmi lesdits orifices d'entrée et de sortie de ladite tête est en communication de fluide étanche avec l'intérieur dudit boîtier par l'intermédiaire d'un espace (98) situé entre lesdits premier et second joints et par l'intermédiaire de ladite au moins une ouverture (70) située dans ledit boîtier,
caractérisé en ce qu'il comporte une paire de sièges pour pattes (22, 24) située sur ladite tête (12) et une paire complémentaire de pattes qui sont agencées sur ledit récipient (14) qui peuvent être mises en prise l'une avec l'autre par l'intermédiaire d'une rotation sur un quart de tour du récipient pour verrouiller le récipient sur la tête, chacun desdits sièges pour pattes (22, 24) étant pourvu d'un tronçon incliné (102, 104) destiné à faciliter la mise en rotation du récipient pouvant être adapté même si le récipient n'est pas entièrement en butée contre la tête.

2. Dispositif de filtration selon la revendication 1, dans lequel ledit boîtier a une coupe transversale circulaire.

3. Dispositif de filtration selon la revendication 1, dans lequel lesdites pattes comportent des première et seconde pattes qui sont à niveau avec la surface supérieure dudit boîtier et qui sont écartées l'une de l'autre d'environ 180°.

4. Dispositif de filtration selon la revendication 1, dans lequel les sièges pour pattes (22, 24) comportent respectivement une paroi verticale en arc de cercle (26, 28) et une paroi rentrante (30, 32) formant came.
